# EUROPÄISCHE PATENTSCHRIFT

(11) **EP 3 693 430 B1**
(45) Veröffentlichungstag und Bekanntmachung des Hinweises auf die Patenterteilung: **24.07.2024**
(21) Anmeldenummer: 20156125.5
(22) Anmeldetag: 07.02.2020
(51) Int. Cl.: C09J 7/35, C09J 7/20, C09J 7/21

(54) **VERFAHREN ZUM UMMANTELN VON LANGESTRECKTEM GUT, INSBESONDERE LEITUNGEN**
METHOD FOR COVERING ELONGATED PRODUCTS, IN PARTICULAR CABLES
PROCÉDÉ DE GAINAGE DE PRODUITS ALLONGÉS, EN PARTICULIER CONDUITES

(30) Priorität: 08.02.2019 DE 102019103123
(43) Veröffentlichungstag der Anmeldung: 12.08.2020
(73) Patentinhaber: tesa SE, 22848 Norderstedt (DE)
(72) Erfinder: Klingeberg, Kerstin, 22527 Hamburg (DE); Simonis, Heike, 22299 Hamburg (DE); Guldbrandsen, Lars, 22885 Barsbüttel (DE); Schubert, Thomas, 22850 Norderstedt (DE)
(74) Vertreter: tesa SE

(56) Entgegenhaltungen:
- EP-A2- 1 029 521
- DE-A1- 19 807 752
- DE-A1- 3 605 192
- DE-T2- 69 311 349
- DE-U1- 202004 019 761

## Beschreibung

Die Erfindung betrifft ein Verfahren zum Ummanteln von Leitungen oder Kabelsätzen.

Seit geraumer Zeit werden in der Industrie Klebebänder zur Herstellung von Kabelbäumen verwendet. Die Klebebänder werden zum Bündeln einer Vielzahl von elektrischen Leitungen vor dem Einbau oder in bereits montiertem Zustand eingesetzt, um beispielsweise den Raumbedarf des Leitungsbündels durch Bandagieren zu reduzieren und zusätzlich Schutzfunktionen wie Schutz gegen mechanische und/oder thermische Beanspruchung zu erreichen. Gängige Formen von Klebebändern umfassen Folien- oder Textilträger, die in der Regel einseitig mit Haftklebemassen beschichtet sind. Klebebänder zum Ummanteln von langgestreckten Gütern sind beispielsweise aus der EP 1 848 006 A2, der DE 10 2013 213 726 A1, und der EP 2 497 805 A1 bekannt.

Derzeitige mit Klebeband umwickelte Kabelsätze sind in der Regel flexibel. Dies ist jedoch aus fertigungstechnischen Gründen oft unerwünscht. In der Fertigung werden die Kabelstränge in der Regel zu einem Kabelplan vorgefertigt und dann in das zu bestückende Objekt wie beispielsweise Automobile eingesetzt. Ein Kabelsatzplan entspricht der tatsächlichen räumlichen Anordnung der einzelnen Kabelstränge in dem Kabelsatz, also welcher Kabelstrang an welcher Stelle in welchem Winkel gebogen ist, wo sich Positionen von Abzweigen oder Ausbindungen befinden und mit welchen Steckern die Enden der Kabelstränge belegt sind.

Um die einzelnen Stränge des Kabelsatzes in einer bestimmten Form zu halten, so dass sie zum Beispiel im Motorraum um den Motor herumgeführt werden können, ohne mit dem Motor in Kontakt zu kommen, werden um den mit Klebeband umwickelten Kabelbaum üblicherweise nachträglich Spritzgussteile angebracht. Diese Spritzgussteile haben aber den Nachteil, dass ein zusätzlicher Material- und Montageaufwand anfällt.

Aus der DE 36 05 192 A1 ist ein Versteifungsmaterial mit Schmelzklebereigenschaften für Schuhe und Schuhteile bekannt, bestehend aus einem Trägermaterial, das beidseitig mit einer Heißschmelzklebechicht versehen ist. Das wesentliche Kennzeichen besteht darin, dass das Trägermaterial und die Heißschmelzkleberschichten nicht oder nur sehr unvollständig verfilmt sind und das Material erst nach der Verarbeitung bei der Aktivierung des Klebers steif wird.

Die DE 20 2004 019761 U1 offenbart ein Kabelwickelband zur Erzielung eines Abriebschutzes, mit einem bandförmigen textilen Träger mit einer druckempfindlichen Klebstoffschicht sowie mit einer mindestens einseitig auf den Träger aufgetragenen, aus einer Polyurethanmasse bestehenden Beschichtung.

Die DE 198 07 752 A1 beschreibt ein foggingfreies Selbstklebeband, umfassend einen foggingfreien Träger, auf dem zumindest einseitig eine foggingfreie, druckempfindliche Klebemasse aufgetragen ist.

Die EP 1 029 521 A2 offenbart ein thermoplastisches Verbandmaterial, insbesondere ein thermoplastisches Verbandmaterial für orthopädische und andere medizinische Anwendungen zum Ruhigstellen von Gliedmaßen und/oder Gelenken, das eine erste Textilbahn, einen darauf aufgebrachten thermoplastischen Kunststoff und mindestens eine auf dieses Komposit aufgebrachte zweite Textilbahn umfasst.

Aus der DE 693 11 349 T2 ist eine thermoverformbare und aufeinander thermoklebbare, nachgiebige oder steife, rasch aushärtende Verbund-Stoffverbindung in Form von Folien, Platten, Bändern oder Schichtstoffen bekannt. Mit dem Produkt werden Bandagen, äußere und fixierende Orthesen und Prothesen, aber auch nachgiebige, thermoklebende Bandagen hergestellt.

In der WO 2015/004190 A1 wird ein Verfahren zum Ummanteln von langgestrecktem Gut wie insbesondere Leitungen oder Kabelsätzen offenbart, bei dem das langgestreckte Gut mit einem Klebeband mit darauf aufgebrachter aushärtbarer Klebemasse in einer Schraubenlinie oder in axialer Richtung umhüllt wird und die auf dem Klebeband aufgebrachte Klebemasse durch Zufuhr von Strahlungsenergie wie Wärme ausgehärtet wird. Zur thermischen Aushärtung wird dabei eine Temperatur von 175°C angewendet.

Nachteilig bei diesem Verfahren ist die hohe Aushärtungstemperatur, die bei der Montage von Kabelsträngen während des Fertigungsprozesses beispielsweise in der Automobilindustrie wenig praktikabel ist, insbesondere weil die oft aus PVC gefertigten Kabelisolierungen beschädigt werden können. Folglich werden bislang Kabelpläne in vorgefertigen Spritzgussformen verlegt. Dies ist mit hohem Fertigungsaufwand verbunden.

Daher sind Klebebänder wünschenswert, deren Klebemassen bei höchstens 110°C, bevorzugt höchstens 100°C, weiter bevorzugt zwischen 60°C und 100°C aushärten oder bei dieser Temperatur verarbeitbar und nach Abkühlung rigide sind, damit die Umhüllung von Klebebändern in den Fertigungsprozess der Kabelbäume bzw. Kabelpläne integriert werden kann. Die Klebebänder müssen nach dem Aushärten die geforderten Anforderungen an Formstabilität aufweisen. Andererseits dürfen die Klebemassen nicht schon bei der Lagerung aushärten, da sie ansonsten nicht mehr verwendbar sind. Schließlich soll die Aushärtung innerhalb der Taktzeit des Herstellungsprozesses (ca. 6 Min.) stattfinden.

Aufgabe der vorliegenden Erfindung ist es daher, ein Verfahren zum Ummanteln von Leitungen oder Kabelsätzen unter Verwendung eines rigiden Klebebands, das die oben beschriebenen Anforderungen erfüllt, zur Verfügung zu stellen.

Zur Lösung der technischen Probleme wird ein Verfahren zum Ummanteln von Leitungen oder Kabelsätzen vorgeschlagen, wie es im Anspruch 1 beschrieben ist.

Gemäß einer Ausführungsform der Erfindung umfasst der Kabelsatz ein Bündel aus mehreren Kabeln, wie 3 bis 1000 Kabeln, bevorzugt 10 bis 500 Kabeln, insbesondere zwischen 50 und 300 Kabeln. Polycaprolactone und ihre Herstellung sind in der Technik gut bekannt. Beispielsweise offenbaren die WO 2017/155441 A1 und die WO 2017/155442 A1 jeweils Verfahren zur Herstellung von Polycaprolactonen. Hinsichtlich der Herstellung von Polycaprolactonen wird auf diese Dokumente Bezug genommen. Bevorzugt sind Polycaprolactone mit einem mittleren Molekulargewicht (Mₙ) zwischen 20.000 und 150.000, bevorzugt zwischen 30.000 und 80.000, bevorzugter zwischen 30.000 und 50.000. Die Polycaprolactone haben einen Erweichungspunkt zwischen 50°C und 100°C. Bevorzugte Polycaprolactone sind beispielsweise unter dem Handelsnamen Capa^{™} von der Perstorp AB, Schweden erhältlich. Bevorzugte Polycaprolactone sind Capa^{™} 6400, Capa^{™} 6500, Capa^{™} 6800.

Das gewichtsmittlere Molekulargewicht M_{w} wird dabei mittels Gelpermeationschromatographie (GPC) bestimmt. Als Eluent wird THF mit 0,1 Vol.-% Trifluoressigsäure eingesetzt. Die Messung erfolgt bei 25 °C. Als Vorsäule wird PSS-SDV, 5 µ, 10³ Å, ID 8,0 mm x 50 mm verwendet. Zur Auftrennung werden die Säulen PSS-SDV, 5 µ, 10³ Å sowie 10⁵ Å und 10⁶ Å mit jeweils ID 8,0 mm x 300 mm eingesetzt. Die Probenkonzentration beträgt 4 g/l, die Durchflussmenge 1,0 ml pro Minute. Es wird gegen PMMA Standards gemessen. (µ = µm; 1 Ä = 10⁻¹⁰ m). Das gewichtsmittlere Molekulargewicht kann unter Kenntnis des Monomerengewichts in das Zahlenmittlere Molekulargewicht (Mₙ) umgerechnet werden.

Als **Träger** können alle bekannten Folien und textilen Träger wie Gestricke, Gelege, Bänder, Geflechte, Nadelflortextilien, Filze, Gewebe (umfassend Leinwand-, Köper und Atlasbindung), Gewirke (umfassend Kettenwirkware und Strickware) oder Vliese verwendet werden, wobei unter "Vlies" zumindest textile Flächengebilde gemäß EN 29092 (1988) sowie Nähwirkvliese und ähnliche Systeme zu verstehen sind. Besonders vorteilhaft ist ein Klebeband, bei dem als Träger ein Gewebe, ein Vlies oder ein Gewirke eingesetzt wird. Derartige Träger sind beispielsweise in der WO 2015/004190 A1 beschrieben, auf die hier vollständig Bezug genommen wird.

Des Weiteren können Abstandsgewebe und -gewirke mit Kaschierung verwendet werden. Derartige Abstandsgewebe werden in der EP 0 071 212 B1 offenbart. Abstandsgewebe sind mattenförmige Schichtkörper mit einer Deckschicht aus einem Faser- oder Filamentvlies, einer Unterlagsschicht und zwischen diesen Schichten vorhandene einzelne oder Büschel von Haltefasern, die über die Fläche des Schichtkörpers verteilt durch die Partikelschicht hindurchgenadelt sind und die Deckschicht und die Unterlagsschicht untereinander verbinden.

Als Vliesstoffe kommen besonders verfestigte Stapelfaservliese, jedoch auch Filament-, Meltblown sowie Spinnvliese in Frage, die meist zusätzlich zu verfestigen sind. Als mögliche Verfestigungsmethoden sind für Vliese die mechanische, die thermische sowie die chemische Verfestigung bekannt. Besonders vorteilhaft haben sich Vliese erwiesen, die insbesondere durch ein Übernähen mit separaten Fäden oder durch Vermaschen verfestigt sind. Derartige verfestigte Vliese werden beispielsweise auf Nähwirkmaschinen des Typs "Malimo" der Firma Karl Mayer, ehemals Malimo, hergestellt und sind unter anderem bei der Firma Hoftex Group AG beziehbar.

Als Träger kann weiterhin ein Vlies vom Typ Kunit oder Multiknit verwendet werden. Ein Kunitvlies ist dadurch gekennzeichnet, dass es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Malimo" der Firma Karl Mayer schon seit längerer Zeit hergestellt.

Ein Multiknitvlies ist gegenüber dem Kunitvlies dadurch gekennzeichnet, dass das Vlies durch das beidseitige Durchstechen mit Nadeln sowohl auf der Ober- als auch auf der Unterseite eine Verfestigung erfährt. Als Ausgangsprodukt für ein Multiknit dienen in der Regel ein beziehungsweise zwei nach dem Kunit-Verfahren hergestellte einseitig vermaschte Polfaser-Vlieswirkstoffe. Im Endprodukt sind beide Vliesstoffoberseiten durch Faservermaschungen zu einer geschlossenen Oberfläche geformt und durch nahezu senkrecht stehenden Fasern miteinander verbunden. Die zusätzliche Einbringbarkeit weiterer durchstechbarer Flächengebilde und/oder streufähiger Medien ist gegeben.

Schließlich sind auch Nähvliese als Vorprodukt geeignet, ein Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Malimo" der Firma Karl Mayer bekannt.

Besonders geeignet sind auch Nadelvliese. Beim Nadelvlies wird ein Faserflor zu einem Flächengebilde mit Hilfe von mit Widerhaken versehenen Nadeln. Durch wechselndes Einstechen und Ausziehen der Nadeln wird das Material auf einem Nadelbalken verfestigt, wobei sich die Einzelfasern zu einem festen Flächengebilde verschlingen.

Weiterhin besonders vorteilhaft ist ein Stapelfaservlies, das im ersten Schritt durch mechanische Bearbeitung vorverfestigt wird oder das ein Nassvlies ist, das hydrodynamisch gelegt wurde, wobei zwischen 2 Gew.-% und 50 Gew.-% der Fasern des Vlieses Schmelzfasern sind, insbesondere zwischen 5 Gew.-% und 40 Gew.-% der Fasern des Vlieses. Ein derartiges Vlies ist dadurch gekennzeichnet, dass die Fasern nass gelegt werden oder zum Beispiel ein Stapelfaservlies durch die Bildung von Maschen aus Fasern des Vlieses durch Nadelung, Vernähung, Luft und/oder Wasserstrahlbearbeitung vorverfestigt wird. In einem zweiten Schritt erfolgt die Thermofixierung, wobei die Festigkeit des Vlieses durch das Auf- oder Anschmelzen der Schmelzfasern nochmals erhöht wird.

Vorteilhaft und zumindest bereichsweise weist der Träger eine ein- oder beidseitig glattgeschliffene Oberfläche auf, vorzugsweise jeweils eine vollflächig glattgeschliffene Oberfläche. Die glattgeschliffene Oberfläche mag gechintzt sein, wie es beispielsweise in der EP 1 448 744 A1 erläutert wird. Auf diese Weise wird die Abweisbarkeit von Schmutz verbessert.

Als Ausgangsmaterialien für den Träger sind insbesondere (Chemie-)Fasern (Stapelfaser oder Endlosfilament) aus synthetischen Polymeren, auch synthetische Fasern genannt, aus Polyester wie Polyethylenterephthalat, Polyamid, Polyimid, Aramid, Polyolefin, Polyacrylnitril oder Glas, (Chemie)Fasern aus natürlichen Polymeren wie zellulosische Fasern (Viskose, Modal, Lyocell, Cupro, Acetat, Triacetat, Cellulon), wie Gummifasern, wie Pflanzeneiweißfasern und/oder wie Tiereiweißfasern und/oder natürliche Fasern aus Baumwolle, Sisal, Flachs, Seide, Hanf, Leinen, Kokos oder Wolle vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Vlieses eingesetzt werden.

Des Weiteren sind Garne, gefertigt aus den angegebenen Rohstoffen, ebenfalls geeignet. Bei Geweben oder Gelegen können einzelne Fäden aus einem Mischgarn hergestellt werden, also synthetische und natürliche Bestandteile aufweisen. In der Regel sind die Kettfäden und die Schussfäden jedoch jeweils sortenrein ausgebildet.

Bevorzugt wird als Material für den Träger Polyester verwendet, aufgrund der hervorragenden Alterungsbeständigkeit und der hervorragenden Medienbeständigkeit gegenüber Chemikalien und Betriebsmitteln wie Öl, Benzin, Frostschutzmittel u.ä. Darüber hinaus hat Polyester den Vorteil, dass sie zu einem sehr abriebfesten und temperaturbeständigen Träger führen, was für den speziellen Einsatzzweck zur Bündelung von Kabeln in Automobilen und beispielsweise im Motorraum von besonderer Wichtigkeit ist.

Vorteilhaft liegt das Flächengewicht des textilen Trägers zwischen 30 g/m² und 300 g/m², weiter vorteilhaft zwischen 50 g/m² und 200 g/m², besonders vorteilhaft zwischen 50 g/m² und 150 g/m², ganz besonders vorteilhaft zwischen 70 g/m² und 130 g/m².

Gemäß einer besonders vorteilhaften Ausführungsform der Erfindung werden als Träger ein Gewebe oder ein Vlies aus Polyester eingesetzt, die ein Flächengewicht zwischen 50 g/m² und 150 g/m² aufweisen.

Gemäß einer Ausführungsform der Erfindung umfasst das Band mit dem Polycaprolacton enthaltenden Bindemittel zusätzlich noch ein Haftklebstoff, so dass das Band nach dem Umwickeln und vor dem Aushärten auf dem langgestreckten Gut fixiert ist.

Der **Haftklebstoff** ist eine Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Erfindungsgemäß wird als Haftklebstoff eine Strukturklebemasse (Konstruktionsklebstoff, Montageklebstoff) verwendet (siehe Römpp, Georg Thieme Verlag, Dokumentkennung RD-19-04489, letzte Aktualisierung: September 2012). Nach DIN EN 923: 2006-01 sind Strukturklebstoffe Klebstoffe, die Klebverbindungen bilden, die in einem Gefüge für eine vorgegebene längere Zeitspanne eine festgelegte Festigkeit beibehalten können (nach ASTM-Definition: "*bonding agents used for transferring required loads between adherends exposed to Service environments typical for the structure involved*"). Es sind also Klebstoffe für chemisch und physikalisch hoch beanspruchbare Klebungen, die im ausgehärteten Zustand zur Verfestigung der geklebten Substrate beitragen und zur Herstellung von Konstruktionen aus Metallen, Keramik, Beton, Holz oder verstärkten Kunststoffen verwendet werden. Die erfindungsgemäßen Strukturklebstoffe basieren insbesondere auf Reaktionsklebstoffen (Phenolharze, Epoxidharze, Polyimide, Polyurethane und andere).

Die Klebemasse kann nach dem Aushärten elastisch sein, um eine dauerhafte, gegen Schwingungen und Verwindungen unempfindliche Ummantelung sicherzustellen.

Bevorzugt sind Haftklebstoffe, wie sie in den veröffentlichten europäischen Patentanmeldungen EP 2 520 627 A1, EP 2 522 705 A1, EP 2 520 628 A1, EP 2 695 926 A1, EP 2 520 629 A1 und EP 3 433 330 A1 beschrieben werden, auf die hier diesbezüglich Bezug genommen wird.

Gemäß einer ersten Ausführungsform liegt die Haftklebemasse in Form einer getrockneten Polymerdispersion vor, wobei das Polymer aufgebaut ist aus: 5 bis 25 Gew.-%, vorzugsweise 10 bis 22 Gew.-% Ethylen, 30 bis 69 Gew.-%, vorzugsweise 40 bis 60 Gew.-% Alkylacrylatester mit C₄- bis C₁₂-Alkylresten, 20 bis 55 Gew.-%, vorzugsweise 28 bis 38 Gew.-% Vinylacetat, 0 bis 10 Gew.-% andere ethylenisch ungesättigte Verbindungen und die Haftklebemasse zwischen 15 und 100 Gewichtsteile eines Klebrigmachers (bezogen auf die Masse der getrockneten Polymerdispersion) enthält, wie in EP 2 520 627 A1 beschrieben. Bevorzugt handelt es sich bei dem Alkylacrylatester um n-Butylacrylat und/oder 2-Ethylhexylacrylat. Andere ethylenisch ungesättigte Verbindungen umfassen Alkyl(meth)acrylate, bevorzugt C₁- bis C₂₀-Alkyl(meth)acrylate mit Ausnahme der die Alkylacrylatester mit C₄- bis C₁₂-Alkylresten bildenden Monomere, aromatische Vinylmonomere wie Styrol, α-Methylstyrol und Vinyltoluol, C₁- bis C₁₀-Hydroxyalkyl (meth) acrylate wie insbesondere Hydroxyethyl- oder Hydroxypropyl(meth)acrylat, Vinylester aus bis zu 20 Kohlenstoffatomen enthaltenden Carbonsäuren wie Vinyllaurat, Vinylether aus bis zu 10 Kohlenstoffatomen enthaltenden Alkoholen wie Vinylmethylether oder Vinylisobutylether, Vinylhalogenide wie Vinylchlorid oder Vinylidendichlorid, Säureamide wie Acrylamid oder Methacrylamid und ungesättigte Kohlenwasserstoffe mit 3 bis 8 Kohlenstoffatomen wie Propen, Butadien, Isopren, 1-Hexen oder 1-Octen oder deren Mischungen. Darüber hinaus können dem Polymer als Monomer weiterhin vorteilhafterweise ein di- oder mehrfunktionelles Monomer zugesetzt sein, und zwar vorzugsweise zu 0 bis 2 Gew.-% und besonders vorzugsweise zu 0 bis 1 Gew.-%. Beispiele für mehrfunktionale ethylenisch ungesättigte Monomere (e) sind Divinylbenzol, Alkyldiacrylate wie 1,2-Ethylenglykoldiacrylat, 1,4-Butandioldiacrylat, 1,6-Hexandioldiacrylat, 1,8-Octandioldiacrylat oder 1,12-Dodecandioldiacrylat, Triacrylate wie Trimethylolpropantri-acrylat und Tetraacrylate wie Pentaerythritoltetraacrylat. Die Polymerdispersion wird hergestellt durch das Verfahren der Emulsionspolymerisation der genannten Komponenten. Besonders bevorzugte Ausführungsformen und ausführliche Beschreibungen der Einsatzstoffe sowie der Herstellungsverfahren findet man in EP 0 017 986 B1 sowie EP 0 185 356 B1.

Gemäß einer weiteren Ausführungsform liegt die Haftklebemasse in Form einer getrockneten Polymerdispersion vor, wobei das Polymer aufgebaut ist aus: (a) 90 bis 99 Gew.-% n-Butylacrylat und/oder 2-Ethylhexylacrylat, bevorzugt 2-Ethylhexylacrylat, (b) 0 bis 10 Gew.-% eines ethylenisch ungesättigten Monomers mit einer Säure- oder Säureanhydridfunktion, (c) 10 bis 1 Gew.-% eines oder mehreren von (a) und (b) verschiedenen ethylenisch ungesättigten monofunktionellen Monomeren, wie Acrylnitril und/oder Methacrylnitril, (d) 0 bis 1 Gew.-% eines di- oder mehrfunktionellen Monomers und die Haftklebemasse zwischen 15 und 100 Gewichtsteile eines Klebrigmachers (bezogen auf die Masse der getrockneten Polymerdispersion) enthält, wie in EP 2 522 705 A1 beschrieben. Eine besonders bevorzugte Ausführungsform der Erfindung umfasst also eine Mischung aus 2-Ethylhexylacrylat als Monomer (a) und Acrylnitril als Monomer (c). Als Monomer (b) kommen vorteilhaft in Betracht zum Beispiel Acrylsäure, Methacrylsäure, Itaconsäure, Maleinsäure, Fumarsäure und/oder Maleinsäureanhydrid. Bevorzugt sind Acrylsäure oder Methacrylsäure, gegebenenfalls die Mischung aus beiden. Beispiele für mehrfunktionale ethylenisch ungesättigte Monomere (d) sind Divinylbenzol, Alkyldiacrylate wie 1,2-Ethylenglykoldiacrylat, 1,4-Butandioldiacrylat, 1,6-Hexandiol-diacrylat, 1,8-Octandioldiacrylat oder 1,12-Dodecandiol-diacrylat, Triacrylate wie Trimethylolpropantriacrylat und Tetraacrylate wie Pentaerythritoltetraacrylat. Die Polymerdispersion wird hergestellt durch das Verfahren der Emulsionspolymerisation der genannten Komponenten. Beschreibungen dieses Verfahrens werden zum Beispiel gegeben in der EP 1 378 527 B1 beschrieben.

Gemäß einer weiteren Ausführungsform liegt die Haftklebemasse in Form einer getrockneten Polymerdispersion vor, wobei das Polymer aufgebaut ist aus: (a) 40 bis 90 Gew.-% n-Butylacrylat und/oder 2-Ethylhexylacrylat, bevorzugt (b) 2-Ethylhexylacrylat, 0 bis 10 Gew.-% eines ethylenisch ungesättigten Monomers mit einer Säure- oder Säureanhydridfunktion, (c) 60 bis 10 Gew.-% eines oder mehreren von (a) und (b) verschiedenen ethylenisch ungesättigten monofunktionellen Monomeren, (d) 0 bis 1 Gew.-% eines di- oder mehrfunktionellen Monomers und die Haftklebemasse zwischen 15 und 100 Gewichtsteile eines Klebrigmachers (bezogen auf die Masse der getrockneten Polymerdispersion) enthält, wie in EP 2 520 628 A1 beschrieben. Als Monomer (b) kommen vorteilhaft in Betracht zum Beispiel Acrylsäure, Methacrylsäure, Itaconsäure, Maleinsäure, Fumarsäure und/oder Maleinsäureanhydrid. Bevorzugt sind Acrylsäure oder Methacrylsäure, gegebenenfalls die Mischung aus beiden. Unter Monomere (c) fallen Alkyl(meth)acrylate, bevorzugt C₁- bis C₂₀-Alkyl(meth)acrylate mit Ausnahme der (a) bildenden Monomere, aromatische Vinylmonomere wie Styrol, α-Methylstyrol und Vinyltoluol, C₁- bis C₁₀-Hydroxyalkyl-(meth)acrylate wie insbesondere Hydroxyethyl- oder Hydroxy-propyl(meth)acrylat, Vinylester aus bis zu 20 Kohlenstoffatomen enthaltenden Carbonsäuren wie Vinylacetat oder Vinyllaurat, Vinylether aus bis zu 10 Kohlenstoffatomen enthaltenden Alkoholen wie Vinylmethylether oder Vinylisobutylether, Vinylhalogenide wie Vinylchlorid oder Vinylidendichlorid, Säureamide wie Acrylamid oder Methacrylamid und ungesättigte Kohlenwasserstoffe mit 2 bis 8 Kohlenstoffatomen wie Ethylen, Propen, Butadien, Isopren, 1-Hexen oder 1-Octen. Erfindungsgemäß besonders bevorzugt ist Ethylacrylat. Beispiele für mehrfunktionale ethylenisch ungesättigte Monomere (d) sind Divinylbenzol, Alkyldiacrylate wie 1,2-Ethylenglykoldiacrylat, 1,4-Butandioldiacrylat, 1,6-Hexandioldiacrylat, 1,8-Octandioldiacrylat oder 1,12-Dodecandioldiacrylat, Triacrylate wie Trimethylolpropantriacrylat und Tetraacrylate wie Pentaerythritoltetraacrylat. Die Polymerdispersion wird hergestellt durch das Verfahren der Emulsionspolymerisation der genannten Komponenten. Beschreibungen dieses Verfahrens werden zum Beispiel gegeben in der EP 1 378 527 B1 beschrieben.

Gemäß einer weiteren Ausführungsform liegt die Haftklebemasse in Form einer getrockneten und Elektronenstrahl (ESH) vernetzten polymeren Acrylatdispersion, insbesondere einer wässrigen Acrylatdispersion, bevorzugt mit einem Gelwert von größer gleich 40 %, bestimmt mittels Soxhlet-Extraktion, wobei die polymere Acrylatdispersion Polymere umfasst, die aufgebaut sind aus (a) monomeren Acrylaten und optional (b) ethylenisch ungesättigten Comonomeren, die keine Acrylate sind, wobei die Haftklebemasse zwischen 15 und 100 Gewichtsteile eines Klebrigmachers (bezogen auf die Masse der getrockneten polymeren Dispersion) enthält, wie in EP 2 695 926 A1 beschrieben.

Gemäß einer weiteren Ausführungsform weist die Haftklebemasse eine Scherviskosität ei einer Temperatur von 25°C während der Beschichtung aus Dispersion 200 bis 100.000 Pa·s bei einer Schergeschwindigkeit von 10⁻² s⁻¹ und 0,1 bis 10 Pa·s bei einer Schergeschwindigkeit von 100 s⁻¹ auf. Die Haftklebemasse besteht vorzugsweise aus einer wässrigen Acrylatdispersion, also einem in Wasser fein dispergierten Polyacrylsäureester mit Haftklebeeigenschaften, wie sie zum Beispiel im Handbook of Pressure Sensitive Technology von D. Satas beschrieben sind. Acrylathaftklebemassen sind typischerweise radikalisch polymerisierte Copolymere aus Acrylsäurealkylestern oder Methacrylsäurealkylestern von C₁- bis C₂₀-Alkoholen wie zum Beispiel Methylacrylat, Ethyl(meth)acrylat, n-Butyl(meth)acrylat, t-Butyl(meth)acrylat, Cyclohexyl(meth)acrylat, 2-Ethylhexyl(meth)acrylat, n-Octyl(meth)acrylat, iso-Octyl(meth)-acrylat, n-Decyl(meth)acrylat, n-Dodecyl(meth)acrylat, Tetradecyl-(meth)acrylat, Lauryl(meth)acrylat, Oleyl(meth)acrylat, Palmityl-(meth)acrylat und Stearyl(meth)acrylat neben weiteren (Meth)acrylsäureestern wie Isobornyl(meth)acrylat, Benzyl(meth)-acrylat, Phenyl(meth)acrylat und 2-Bromoethyl(meth)acrylat, Alkoxy-alkyl(meth)acrylate wie Ethoxyethyl(meth)acrylat. Weiterhin fallen darunter Ester von ethylenisch ungesättigten Di- und Tricarbonsäuren und Anhydriden wie Ethylmaleat, Dimethylfumarat und Ethyl-methylitaconat. Ebenfalls fallen vinylaromatische Monomere wie zum Beispiel Styrol, Vinyltoluol, Methylstyrol, n-Butylstyrol, Decylstyrol darunter, wie in der EP 2 520 629 A1 beschrieben.

Gemäß einer weiteren Ausführungsform liegt die Haftklebemasse in Form einer getrockneten Polymerdispersion vor, wobei das Polymer aufgebaut ist aus: (a) 95,0 bis 100,0 Gew.-% n-Butylacrylat und/oder 2-Ethylhexylacrylat und (b) 0,0 bis 5,0 Gew.-% eines ethylenisch ungesättigten Monomers mit einer Säure- oder Säureanhydridfunktion, wie in der EP 2 433 330 A1 beschrieben. Vorzugsweise besteht das Polymer aus 95,0 bis 99,5 Gew.-% n-Butylacrylat und/oder 2-Ethylhexylacrylat und 0,5 bis 5 Gew.-% eines ethylenisch ungesättigten Monomers mit einer Säure- oder Säureanhydridfunktion, weiter vorzugsweise aus 98,0 bis 99,0 Gew.-% n-Butylacrylat und/oder 2-Ethylhexylacrylat und 1,0 bis 2,0 Gew.-% eines ethylenisch ungesättigten Monomers mit einer Säure- oder Säureanhydrid-funktion. Neben den aufgeführten Acrylatpolymeren können der Haftklebemasse neben gegebenenfalls vorhandenen Restmonomeren zusätzlich die weiter unten erwähnten Klebrigmacher und/oder Zuschlagstoffe wie Lichtschutz- oder Alterungsschutzmitteln in den ebenfalls unten genannten Mengen zugesetzt werden. Insbesondere sind keine weiteren Polymere wie Elastomere in der Haftklebemasse enthalten, das heißt, die Polymere der Haftklebemasse bestehen nur aus den Monomeren (a) und (b) in den angegebenen Mengenverhältnissen.

Gemäß einer weiteren Ausführungsform liegt die Haftklebemasse in Form einer getrockneten und Polymerdispersion vor, wobei das Polymer aufgebaut ist aus: (a) 97,0 bis 98,0 Gew.-% n-Butylacrylat und/oder 2-Ethylhexylacrylat, (b) 2,0 bis 3,0 Gew.-% eines ethylenisch ungesättigten Monomers mit einer Säure- oder Säureanhydridfunktion. Vorzugsweise besteht das Polymer aus 97,2 bis 97,7 Gew.-% n-Butylacrylat und/oder 2-Ethylhexylacrylat, bevorzugt n-Butylacrylat, und 2,3 bis 2,8 Gew.-% eines ethylenisch ungesättigten Monomers mit einer Säure- oder Säureanhydridfunktion. Als Monomer (b) kommen vorteilhaft in Betracht zum Beispiel Acrylsäure, Methacrylsäure, Itaconsäure, Maleinsäure, Fumarsäure und/oder Maleinsäure-anhydrid.

Gemäß einer weiteren Ausführungsform sind die Haftklebemassen vernetzerfrei. "Vernetzerfrei" im Sinne dieser Erfindung bedeutet, dass der Haftklebemasse keine zur Vernetzung befähigten Verbindungen zugesetzt werden. Wie hier verwendet, steht der Begriff Vernetzer für chemische Verbindungen, die imstande sind, Molekülketten miteinander zu verbinden, damit sich aus den zweidimensionalen Strukturen über Ausbildung intermolekularer Brücken dreidimensional-vernetzte Strukturen bilden können. Vernetzer sind solche - insbesondere bi- oder polyfunktionelle, meist niedermolekulare - Verbindungen, die unter den gewählten Vernetzungsbedingungen mit geeigneten - insbesondere funktionellen - Gruppen der zu vernetzenden Polymere reagieren können, somit zwei oder mehrere Polymere oder Polymerstellen miteinander verknüpfen ("Brücken" bilden) und somit ein Netzwerk aus dem zu vernetzenden Polymer beziehungsweise den zu vernetzenden Polymeren schaffen. Hierdurch kommt es in der Regel zur Kohäsionserhöhung. Typische Beispiele für Vernetzer sind chemische Verbindungen, die innerhalb des Moleküls oder an den beiden Molekülenden zwei oder mehr gleiche oder unterschiedliche funktionelle Gruppen aufweisen und folglich Moleküle gleicher oder auch unterschiedlicher Strukturen miteinander vernetzen können. Außerdem kann ein Vernetzer mit dem reaktiven Monomer oder Reaktivharz, wie oben definiert, reagieren, ohne dass es dabei zu einer Polymerisation im eigentlichen Sinne kommt. Denn im Gegensatz zum Aktivator, wie oben beschrieben, kann ein Vernetzer in das Polymer-Netzwerk eingebaut werden.

Vorteilhaft liegt der Masseauftrag des auf den Träger aufgebrachten und/oder in den Träger eingebrachten Bindemittels zwischen 30 g/m² und 300 g/m², weiter vorteilhaft zwischen 40 g/m² und 200 g/m², besonders vorteilhaft zwischen 50 g/m² und 200 g/m².

Das Einbringen in den Träger, insbesondere in einen Vlies- oder Gewebeträger kann beispielsweise durch Tränken des Trägers mit der UV-härtbaren Zusammensetzung erfolgen.

Besonders bevorzugt ist ferner die Variante der Erfindung, bei der der Haftklebemasse keinerlei Klebharze zugesetzt sind.

Die Klebemasse und das Bindemittel werden bevorzugt in separaten Arbeitsgängen aufgetragen.

Das fertig beschichtete Material wird vorzugsweise in eine Breite von 20±2 mm (jede andere Breite ist ebenfalls denkbar) geschnitten und spiralförmig mit einer Überlappung von 50% um das in Form gebrachte Kabelbündel gewickelt. Für die Erweichung des Polycaprolactons ist eine Temperaturbeaufschlagung von 60°C bis 100°C für etwa 10 Sek. bis 4 Min. nötig. Die Temperaturbeaufschlagung kann durch Heißluftfön, IR-Strahler, Ofen, Heizmanschette, o.ä. erfolgen.

Gemäß einer bevorzugten Ausführungsform der Erfindung ist das Bindemittel nach dem Aufbringen auf den Träger zu mehr als 10%, vorzugsweise zu mehr als 25%, weiter vorzugsweise zu mehr als 50% in den Träger eingesunken. Ein Zahlenwert von beispielsweise 25% bedeutet dabei, dass die Klebemasse über eine Schichtdicke von 25% der Dicke des textilen Trägers eingedrungen ist, also bei einem Träger mit einer Dicke von 100 um über eine Schichtdicke von 25 um innerhalb des Trägers, und zwar beginnend von der Fläche des Trägers, auf der die Klebemasse beschichtet ist, und in senkrechter Richtung zu der von der Längs-beziehungsweise Quererrichtung aufgespannten Ebene.

Gegenstand der vorliegenden Erfindung ist ein Verfahren zum Ummanteln von Leitungen oder Kabelsätzen, wobei ein beschichtetes Band durch die Zufuhr von Wärme bei einer Temperatur zwischen 60°C und 100°C erweicht wird und anschließend in einer Schraubenlinie um die Leitungen oder Kabelsätze geführt wird oder die Leitungen oder Kabelsätze in axialer Richtung von dem Klebeband umhüllt werden, die Leitungen oder Kabelsätze mitsamt dem umhüllenden Klebeband in den Kabelsatzplan gebracht werden, die Leitungen oder Kabelsätze in dieser Anordnung gehalten werden, bis sich das Klebeband durch Abkühlen wieder verfestigt hat. Das Band umfasst einen bandförmigen Träger, der auf mindestens einer Seite mit einem bei einer Temperatur von 50°C bis 100°C thermisch erweichbaren Bindemittel versehen ist, das ein Polycaprolacton umfasst.

Gemäß einer Ausführungsform der Erfindung wird die thermische Energie über einen Zeitraum von 10 Sek. bis 2 Min. zugeführt, der mit den Taktzeiten des Fertigungsprozesses kompatibel ist, so dass das langgestreckte Gut nach etwa 6 Min. vollständig ausgehärtet ist, sobald es im Zielobjekt wie Automobilen, Wasserfahrzeugen oder Flugzeugen verbaut wird.

Gemäß einer weiteren Ausführungsform der Erfindung wird die thermische Energie dem Band zugeführt und das Band bei einem gewünschten Temperaturbereich gehalten, bis es um das langgestreckte Gut geführt ist und/oder bis es das langgestreckte Gut ummantelt.

Das Band wird vorzugsweise spiralförmig mit einer Überlappung von 30% bis 70%, bevorzugter 40 bis 50%, insbesondere etwa 50% um das langgestreckte Gut umwickelt.

### Beispiele:

### Beispiel 1 - Herstellung eines beschichteten Bands

Ein 20 mm breiter und 100 µm dicker PET Gewebeträger mit einem Flächengewicht von 130 g/m² wurde mit Polycaprolacton Capa^{™} 6400 in einem Einschneckenextruder mittel Temperaturprofil von 85°C bis 100°C abgelegt und in einem Kalanderspalt in den Gewebeträger hineingedrückt. Mit Hilfe einer auf 20°C temperierten Walze wird das Materials auf Raumtemperatur gekühlt und anschließend zu einem Ballen gewickelt.

### Beispiel 2 - Biegeprüfung zur Ermittlung der Steifigkeit

Ein Prüfmuster, bestehend aus 250 Einzelleitungen mit einem Leitungsquerschnitt von 0,35 mm², wurde mithilfe eines 9 mm breiten Klebebandes (tesa 51618) zu einem Musterleitungssatz gebündelt, so dass der Musterleitungssatz einen Durchmesser von 23±5 mm und eine Länge von 300±50 mm aufwies. Dieser Musterleitungssatz wurde mit dem erwärmten versteifenden Material aus Beispiel 1 spiralförmig umwickelt, wobei ein Überlapp von 50% gewährleistet wurde. Anschließend wurde das versteifende Material auf Raumtemperatur abkühlen gelassen.

Der gehärtete Musterleitungssatz wurde einer Biegeprüfung unterzogen, um den Einfluss des versteifenden Materials auf die Steifigkeit zu bestimmen. Die Biegeprüfung wurde an einer Zugprüfmaschine vorgenommen. Dafür wurde der Musterleitungssatz auf zwei Backen mit einem Abstand von 70 mm gelegt und mittig mit einer Druckfinne um einen Weg von 30 mm eingedrückt und belastet. Die für die Verformung des Messwegs nötige Kraft wurde von einer Zugprüfmaschine in Newton aufgezeichnet. Die Prüfgeschwindigkeit betrug 100 mm/min, sowohl bei der Belastung, als auch bei der Entlastung des Musterleitungssatzes. Die Prüfung wurde an 3 verschiedenen Stellen des Leitungssatzes (Anfang, Mitte und Ende) durchgeführt. Die Biegekraft resultiert aus dem Mittelwert der drei Einzelmessungen und wurde in drei Kategorien wie folgt bewertet:

### Bewertungskategorien 3-Punkt Biegeversuch:

| | |
|---|---|
| + | gut geeignet für die Anwendung (500-750 N) |
| O | eingeschränkt geeignet für die Anwendung (400-500 N und 700-800 N) |
| - | nicht geeignet für die Anwendung (<400 und >800 N) |

Zum Vergleich wurde ein kommerziell erhältliches Klebeband, tesa^{®} 51036, dem gleichen Versuch unterworfen. Die Ergebnisse sind in der nachfolgenden Tabelle 1 aufgeführt.

### Beispiel 3 - C-Form-Prüfung zur Ermittlung der Steifigkeit bei unterschiedlichen Temperaturen

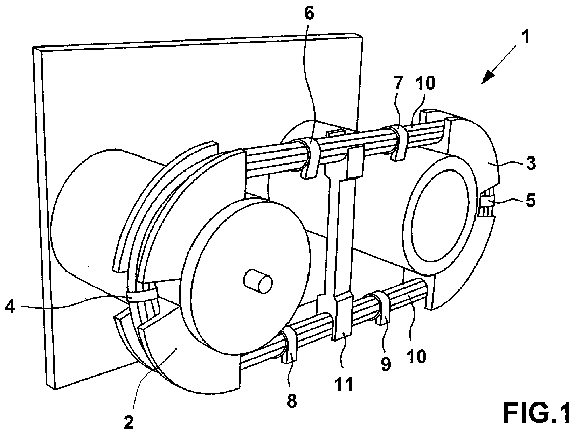

Zur Ermittlung der Steifigkeit eines gebogenen Kabelmusters wurde ein Testverfahren entwickelt (C-Kabelmuster-Biegeprüfung). Zur Herstellung eines C-Kabelmusters (siehe Fig. 1) wird eine Kabelleitung (10) mit einem Leitungsquerschnitt von 0,35 mm² 100 mal um eine Halterung (1) zu einem Musterleitungssatz gewickelt. Die Halterung (1) weist zwei gegenüberliegende, halbkreisförmige Führungen (2, 3) mit einem Durchmesser von 120 mm auf, die mit einem Abstand (A) von etwa 210 mm beabstandet sind. Der gewickelte Kabelsatz ist in **Fig. 1** dargestellt.

Die Zahl der Kabelwicklungen beträgt 100. Es entsteht ein Musterleitungssatz mit einem Durchmesser von 15±5 mm und einem Umfang von 690 mm. An den Apizes der Halbkreissegmente und an jeweils zwei Geradenabschnitten (Schenkeln) wird das Kabelbündel (10) mit Kabelbindern (4, 5, 6, 7, 8, 9) mit einer Zugkraft von 210±10 N zusammengeschnürt und fixiert, so dass das das Kabelbündel (10) nach Herausnahme aus der Halterung eine ausreichende Steifigkeit besitzt, um sich nicht zu verformen. Um sie Steifigkeit des Kabelbündels (10) weiter zu verbessern, wird zwischen den Schenkeln des Kabelbündels eine Stütze (11) positioniert und ebenfalls mit Kabelbindern fixiert.

Das so hergestellte Kabelbündel (10) wird aus der Halterung herausgenommen und mit dem zu prüfenden und zuvor erwärmten Klebeband (Breite 19 mm-20 mm) mit einer 50%igen Überlappung umwickelt. Dazu wird mit der Umwicklung an einem Kabelbinder (z.B. 6 oder (7)) des Schenkels in Richtung Kreissegment ((6)->(4) oder (7)->(5)) begonnen. Wenn die Umwicklung den Kabelbinder (4) bzw. (5) am Apex des Halbkreissegments erreicht, wird dieser entfernt und die Wicklung bis zum nächsten Kabelbinder ((4)->(8) bzw. (5)->(9)) des gegenüberliegenden Schenkels fortgeführt. Genauso wird auch an der anderen Seite, am anderen Halbkreissegment verfahren.

Die so präparierten Muster werden der entsprechenden Versteifungsmethode (Abkühlung auf Raumtemperatur) zugeführt. Mit einem Seitenschneider werden die Muster, benachbart zu den noch vorhandenen Kabelbindern geschnitten, um zwei "C-förmige" Kabelmuster (C-Kabelmuster) zu erhalten, die an beiden Seiten des halbkreisförmigen, umwickelten Abschnitts jeweils auch einen nicht umwickelten Abschnitt aufweisen. Der Schnitt erfolgt im Abstand des Durchmessers (120 mm) vom Apex des Halbkreissegments, projiziert auf die Kreismitte.

Mit je einem Stück Kabel werden Schlaufen an die Schenkelenden der Muster gebunden, damit sie an dem einen Ende aufgehängt und am anderen Ende ein Gewicht angehängt werden kann. Die verbliebenen Kabelbinder werden jetzt entfernt, da sie das Prüfergebnis verfälschen können. Der Abstand zwischen den Schenkeln wird nun bestimmt.

Eines der beiden Muster wird unter Raumtemperatur gelagert und das andere bei 60°C.

An den jeweiligen unteren Schenkel des "C-Prüflings" wird ein 1 kg-Gewicht gehängt. Nach einer Stunde wird die Auslenkung des Kabelbündels notiert (Auslenkverhalten 1 h bei RT bzw. 60°C) und das Gewicht entfernt. Nach einer Minute wird die Auslenkung erneut bestimmt (Rückstellverhalten 1 min bei RT bzw. 60°C). Nach einer Stunde wird die Auslenkung dann wieder bestimmt und notiert (Rückstellverhalten 1 h bei RT bzw. 60°C).

Die ermittelten Werte der C-Form-Verformung wurden in drei Kategorien eingestuft, gut geeignet für die Anwendung, eingeschränkt geeignet für die Anwendung und nicht geeignet für die Anwendung. Die Kategorien wurden wie folgt bewertet:

### Bewertungskategorien C-Form-Biegeversuch (Raumtemperatur):

| | |
|---|---|
| + | gut geeignet für die Anwendung (< 15% Auslenkung) |
| O | eingeschränkt geeignet für die Anwendung (>15-30%) |
| - | nicht geeignet für die Anwendung (>30%) |

### Bewertungskategorien C-Form-Biegeversuch (60°C):

| | |
|---|---|
| + | gut geeignet für die Anwendung (< 25% Auslenkung) |
| O | eingeschränkt geeignet für die Anwendung (>25-40%) |
| - | nicht geeignet für die Anwendung (>40%) |

### Bewertungskategorien C-Form-Biegeversuch (Rückstellverhalten bei RT und 60°C):

| | |
|---|---|
| + | gut geeignet für die Anwendung (< 10% Auslenkung) |
| O | eingeschränkt geeignet für die Anwendung (10-30%) |
| - | nicht geeignet für die Anwendung (>30%) |

Zum Vergleich wurde ein kommerziell erhältliches Klebeband, tesa^{®} 51036, dem gleichen Versuch unterworfen. Die Ergebnisse sind ebenfalls in der nachfolgenden Tabelle 1 aufgeführt.

**Tabelle 1:**

| | 3-Punkt Biegeversuch | C-Form-Verformung bei RT | C-Form-Rückstellverhalten bei RT |
|---|---|---|---|
| Beispiel 1 | + | + | + |
| tesa^{®} 51036 | - | - | - |

| | C-Form-Verformung bei 60°C | C-Form-Rückstellverhalten bei 60°C | |
|---|---|---|---|
| Beispiel 1 | + | + | |
| tesa^{®} 51036 | - | - | |

### Legende:

| | |
|---|---|
| + | gut geeignet für die Anwendung |
| o | eingeschränkt geeignet für die Anwendung |
| - | nicht geeignet für die Anwendung |

## Patentansprüche

1. Verfahren zum Ummanteln von Leitungen oder Kabelsätzen, wobei ein beschichtetes Band durch die Zufuhr von Wärme bei einer Temperatur zwischen 60°C und 100°C erweicht wird und anschließend in einer Schraubenlinie um die Leitungen oder Kabelsätze geführt wird oder die Leitungen oder Kabelsätze in axialer Richtung von dem Klebeband umhüllt werden, die Leitungen oder Kabelsätze mitsamt dem umhüllenden Klebeband in den Kabelsatzplan gebracht werden, die Leitungen oder Kabelsätze in dieser Anordnung gehalten werden, bis sich das Klebeband durch Abkühlen wieder verfestigt hat,
wobei das Band einen bandförmigen Träger umfasst, der auf mindestens einer Seite mit einem bei einer Temperatur von 50°C bis 100°C thermisch erweichbaren Bindemittel versehen ist, das ein Polycaprolacton umfasst.

2. Verfahren nach Anspruch 1, **dadurch gekennzeichnet, dass** die thermische Energie über einen Zeitraum von 0,5 Sek. bis 2 Min. zugeführt wird.

3. Verfahren nach einem der vorangehenden Ansprüche, **dadurch gekennzeichnet, dass** das Polycaprolacton ein mittleres Molekulargewicht (Mₙ) (bestimmt nach der in der Beschreibung angegebenen Methode) zwischen 20.000 und 150.000 aufweist

4. Verfahren nach Anspruch 3, **dadurch gekennzeichnet, dass** das Polycaprolacton ein mittleres Molekulargewicht (Mₙ) (bestimmt nach der in der Beschreibung angegebenen Methode) zwischen 30.000 und 80.000 aufweist.

5. Verfahren nach einem der vorangehenden Ansprüche, **dadurch gekennzeichnet, dass** das Band zusätzlich noch einen Haftklebstoff umfasst.

6. Verfahren nach einem der vorangehenden Ansprüche, **dadurch gekennzeichnet, dass** das Trägermaterial ein Polyestervlies umfasst.

7. Verfahren nach einem der vorangehenden Ansprüche, **dadurch gekennzeichnet, dass** das Bindemittel zu mehr als 10%, in den Träger eingesunken ist.

## Claims

1. Method for jacketing leads or cable sets, where a coated tape is softened by the supply of heat at a temperature between 60°C and 100°C and subsequently is guided in a helical line around the leads or cable sets, or the leads or cable sets are wrapped in an axial direction by the adhesive tape, the leads or cable sets together with the adhesive tape wrapping are brought into the cable set plan, the leads or cable sets are held in this disposition until the adhesive tape has resolidified by cooling,
wherein the tape comprises a tapelike carrier provided on at least one side with a binder which is thermally softenable at a temperature of 50°C to 100°C and comprises a polycaprolactone.

2. Method according to Claim 1, **characterized in that** the thermal energy is supplied over a period of 0.5 sec to 2 min.

3. Method according to either of the preceding claims, **characterized in that** the polycaprolactone has an average molecular weight (Mₙ) (determined by the method indicated in the description) of between 20 000 and 150 000.

4. Method according to Claim 3, **characterized in that** the polycaprolactone has an average molecular weight (Mₙ) (determined by the method indicated in the description) of between 30 000 and 80 000.

5. Method according to any of the preceding claims, **characterized in that** the tape additionally further comprises a pressure sensitive adhesive.

6. Method according to any of the preceding claims, **characterized in that** the carrier material comprises a polyester nonwoven.

7. Method according to any of the preceding claims, **characterized in that** the binder has been absorbed to an extent of more than 10% into the carrier.

## Revendications

1. Procédé de gainage de câbles ou de faisceaux de câbles,
un ruban revêtu étant ramolli à une température entre 60°C et 100°C par fourniture de chaleur et ensuite guidé selon une ligne hélicoïdale autour des câbles ou des faisceaux de câbles ou les câbles ou les faisceaux de câbles étant enveloppés dans la direction axiale par le ruban adhésif, les câbles ou les faisceaux de câbles étant amenés avec le ruban adhésif enveloppant dans le plan de câbles, les câbles ou les faisceaux de câbles étant maintenus dans cet agencement jusqu'à ce que le ruban adhésif se soit de nouveau solidifié par refroidissement,
le ruban comprenant un support en forme de ruban qui est pourvu sur au moins une face d'un liant pouvant être ramolli thermiquement à une température de 50°C à 100°C, qui comprend une polycaprolactone.

2. Procédé selon la revendication 1, **caractérisé en ce que** l'énergie thermique est fournie sur une période de temps de 0,5 seconde à 2 minutes.

3. Procédé selon l'une des revendications précédentes, **caractérisé en ce que** la polycaprolactone présente un poids moléculaire moyen (Mn) (déterminé selon le procédé décrit dans la description) entre 20.000 et 150.000.

4. Procédé selon la revendication 3, **caractérisé en ce que** la polycaprolactone présente un poids moléculaire moyen (Mn) (déterminé selon le procédé décrit dans la description) entre 30.000 et 80.000.

5. Procédé selon l'une quelconque des revendications précédentes, **caractérisé en ce que** le ruban comprend en outre encore un autoadhésif.

6. Procédé selon l'une des revendications précédentes, **caractérisé en ce que** le matériau support comprend un non-tissé de polyester.

7. Procédé selon l'une des revendications précédentes, **caractérisé en ce que** le liant est enfoncé à raison de plus de 10% dans le support.
